# EUROPÄISCHE PATENTSCHRIFT

(11) **EP 2 904 897 B1**
(45) Veröffentlichungstag und Bekanntmachung des Hinweises auf die Patenterteilung: **30.08.2017**
(21) Anmeldenummer: 14195062.6
(22) Anmeldetag: 27.11.2014
(51) Int. Cl.: B01F 7/00, B01F 7/24, B01F 15/02, A01K 5/00

(54) **Mischvorrichtung**
Mixing device
Dispositif de mélange

(30) Priorität: 07.02.2014 DE 202014001235 U
(43) Veröffentlichungstag der Anmeldung: 12.08.2015
(73) Patentinhaber: Trioliet Holding B.V., 7575 BE Oldenzaal (NL)
(72) Erfinder: Liet, Cornelis Hendricus, 7581 PJ Losser (NL)
(74) Vertreter: Grünecker Patent- und Rechtsanwälte PartG mbB

(56) Entgegenhaltungen:
- EP-A1- 1 082 896
- US-A1- 2002 021 619
- US-A1- 2009 016 155
- US-A1- 2009 190 440

## Beschreibung

Die Erfindung betrifft eine Mischvorrichtung der im Oberbegriff des Patentanspruchs 1 angegebenen Art.

Solche Mischvorrichtungen werden z.B. zum Transportieren, Mischen 5 und/oder Fordern und/oder Ausdosieren von landwirtschaftlichem Mischgut verwendet, wie beispielsweise Silage, Biomasse, Futter, und ähnlichem. Auch für solche Biomassen wie Stallmist oder vergorenen Mist, oder Fleischabfalle, bzw. Gedärmeinhalte, werden Mischvorrichtungen, beispielsweise zum Beschicken von Biogasanlagen, verwendet.

Diese Mischvorrichtungen werden entweder stationär eingesetzt, oder an Fahrzeuge angebaut, wie beispielsweise Schlepper, oder in Mischfahrzeuge integriert. In der Mischvorrichtung können zusätzlich an drehangetriebenen Komponenten und wandfesten Ausstattungsteilen Schneidmesser und Gegenschneidmesser montiert sein, beim Mischen und Fordern eine Schnittwirkung erbringen. Eine hauptsachliche Anforderung an Mischvorrichtungen ist eine gute Förderung des Mischguts zwecks gründlicher Durchmischung im Mischbehälter in allen Bereichen, eine kontrollierte Ausdosierung sowie eine effiziente Nutzung der zum Mischen und Fördern eingebrachten Energie. Speziell im Randbereich des Bodens angrenzend an die stationäre Wand ist jedoch eine ordnungsgemäße Förderung des Mischguts, auch wegen des Drucks darüber liegenden Mischguts und hoher Reibung schwierig, und ist auch das Bremsmoment außen am Mitnehmer hoch, das durch sehr viel eingesetzte Antriebsenergie überwunden werden muss. Denn in diesem Bereich arbeiten die außenliegenden Mitnehmerenden beim Fördern mit dem größten Hebelarm und der höchsten Fördergeschwindigkeit.

Bei der aus US2009/0190440 A1 bekannten Mischvorrichtung sind an den Leitkegeln in der Mischkammer weit oberhalb des bodenseitigen Anfangs jeder Wendel einer Mischschnecke schräge Deflektoren angeordnet, die das nach oben steigende Mischgut lokal nach unten drücken. Die Deflektoren sind entgegen der Förderrichtung nach oben schräg angestellt. Auf der Höhe der Deflektoren hat der Außendurchmesser der Wendel soweit abgenommen, dass die Wendel nicht unter den jeweiligen Deflektor eingreift.

Bei der aus EP1082896 A1 bekannten Mischvorrichtung sind an der Innenwand des Mischbehälters in unterschiedlichen Höhen scheibenförmige Schneidmesser um wandfeste, vertikale Achsen drehbar gelagert, die mit etwa der Hälfte ihres Umfangs ins Innere des Mischbehälters ragen. An der Wendel der Mischschnecke sind am Rand ebenfalls horrizontale schreibenförmige Schneidmesser drehbar gelagert, die mit den an der Wand angeordneten scheibenförmigen Schneidmessern das Mischgut schneiden, während sie sich gegensinnig drehen. Die als Mitnehmer im Bodenbereich fungierende, radiale Anfangskante der Wendel wirkt mit den scheibenförmigen, am tiefsten angeordneten Messern an der Wand des Mischbehälters nicht nennenswert zusammen.

Bei einer aus US 2009/0016155 A1 bekannten Mischvorrichtung sind an der Außenseite des Mischbehälters aufrecht stehende Wellen gelagert, an denen dreieckige Schneidklingen befestigt sind. Die Schneidklingen können durch Verdrehen der jeweiligen Welle durch Schlitze in der Wand des Mischbehälters geschwenkt werden, und wirken mit an der Wendel der Mischschnecke abstehenden dreieckigen Schneidmessern zusammen, um einen scherenartigen Schnitt im Mischgut auszuführen. Die am tiefsten liegenden Schneidklingen befinden sich in erheblichem Abstand oberhalb des Bodens. Die radiale bodenseitige Anfangskante der Wendel der Mischschnecke fungiert als Mitnehmer für am Boden befindliches Mischgut, arbeitet jedoch mit keiner der durch die Schlitze in der Mischbehälterwand eingeschwenkten Schneidklingen zusammen.

Bei einer aus EP 2 564 694 A bekannten Mischvorrichtung sind angrenzend an die Wand verstellbare Abstreifer vorgesehen, unter denen als Förderelement eine drehangetriebene kreisrunde Auffangfläche oder ein Mitnehmer durchgeht. Der Hochabstand zwischen dem unteren Rand des Abstreifers und der Auffangfläche ist bewusst so klein bemessen, dass kein Mischgut in den Zwischenspalt eindringen kann, sondern ankommendes Mischgut wieder nach innen oder nach außen gefördert wird. Ein Abstreifer ist in Förderrichtung hinter der Ausdosieröffnung angeordnet, ein anderer Abstreifer im Bereich eines an der Wand angeordneten Leitkegels zwischen zwei Mischschnecken. Mischgut kann innen hinter dem unteren Rand des Abstreifers hochsteigen und sich im Abstreifer sammeln, bis es zu einer spürbaren Blockierung und/oder Verstopfung kommt bzw. der Durchgangswiderstand des Mitnehmers unzweckmäßig steigt. Die Mitnehmer sind unterhalb einer Misch- und Förderschnecke, z.B. an einer sternförmigen, ebenen Scheibe angeordnet, so dass sich die außenliegenden Mitnehmerenden eng an der Wand und oberhalb des Bodens bewegen.

Bei einer aus EP 1 709 868 A1 bekannten Mischvorrichtung wird der Mitnehmer von einer annähernd radialen Kante am unteren Ende einer Wendel-, einer Förder- und Mischschnecke gebildet. Der Mitnehmer streicht bei der Rotation mit seinem außenliegenden Mitnehmerende unter der zum Boden weisenden Absaugöffnung einer an der Wand befestigten Absaughaube durch. Die Absaughaube deckt eine Öffnung in der Wand ab, die erheblich größer ist als die Absaugöffnung der Absaughaube und den Einlass eines Gebläses zum Ausdosieren des Gutes bildet. Aufgrund im Gut enthaltener Faser- oder Halmbestandteile neigt Mischgut zum Verhängen und Klumpen-bilden am Rand der zum Boden weisenden Absaugöffnung der Absaughaube. Der Hochabstand zwischen dem Mitnehmer und der Absaughaube ist sehr groß. Aufgrund der Steigung der Wendel der Misch- und Förderschnecke kann Mischgut von unten gegen den Rand der Absaugöffnung der Absaughaube gedruckt werden. Von oben von der Schnecke herabfallendes Gut und vom Mitnehmer gefordertes Gut neigen zum Sammeln und Festsetzen in Winkelbereichen zwischen der Absaughaube und der Wand, was der kontrollierten Forderung und somit Durchmischung des Gutes abträglich ist.

Bei einer aus US 2007/0274151 A1 bekannten Mischvorrichtung für Futter sind im ovalkonischen Behälter nebeneinander zwei gleichsinnig drehangetriebene Misch- und Förderschnecken vorgesehen, zwischen denen an beiden Wandseiten Leitkegel angeordnet sind. Die Ausdosieröffnung ist in Förderrichtung einer Schnecke nach dem Leitkegel ein Ausschnitt in der schrägen Wand. Unter der Schnecke sind nahe oberhalb des Bodens flügelartige Mitnehmer am Schneckenkernrohr befestigt, deren äußere Mitnehmerenden die Ausdosieröffnung überstreichen und Gut durch die Ausdosieröffnung nach außen austragen, wenn die Ausdosieröffnung freigegeben ist. Die Mischvorrichtung ist in ein Mischfahrzeug integriert. Eine annähernd radiale Endkante am unteren Ende der Wendel der Schnecke bildet ebenfalls einen Mitnehmer.

Da in diesen Mischvorrichtungen ein Mischelement, wie beispielsweise eine um die Achse drehangetriebene Misch- und Förderschnecke, einen Großteil des Gewichts des Mischguts im Mischbehälterzentrum aufnimmt, hingegen an der Wand oder an einem gegebenenfalls dort vorgesehenen Leitkegel Mischgut hohen Druck nach unten ausübt, wird aufgrund der Reibung am Boden und an der Wand bzw. dem Leitkegel die Mischgutförderung und Durchmischung dort erheblich erschwert. Eine zügige Förderung eines nennenswerten Anteils des Mischguts wäre in diesem kritischen Bereich jedoch in vielfacher Hinsicht wichtig, weil sie erstens die insgesamt erzielbare Vermischung verbessert, zweitens ein kontrolliertes Ausdosieren durch die bodennahe Ausdosieröffnung ermöglicht, und drittens im Falle von, wie häufig üblich, vorgesehenen Schneidelementen und Gegenschneidelementen, die damit erzielbare, für die Durchmischung und Homogenisierung des Mischguts wichtige Schnittleistung steigert.

Der Erfindung liegt die Aufgabe zugrunde, eine Mischvorrichtung der eingangs genannten Art zu schaffen, bei der mit effizienter Nutzung der Antriebsenergie auch im Übergangsbereich zwischen dem Boden und der Wand eine verbesserte Förderung, Durchmischung und Ausdosierung des Mischguts erreicht werden. Ein Hauptzweck ist es, selbst ausdosierunwilliges Mischgut, wie klebrigen Mist, ohne weitere interne und/oder externe Hilfsvorrichtungen kontrolliert ausdosieren zu können.

Die gestellte Aufgabe wird in den Merkmalen des Patentanspruches 1 gelöst.

Da die Überdachung von dem außenliegenden Mitnehmerbereich durch die Förderstrecke gefördertes Mischgut von, sozusagen oberhalb der Höhenlage der Überdachung, weiterem im Mischbehälter befindlichem Mischgut separiert, lässt sich entlang der Förderstrecke vom Mitnehmer eine Mischgutcharge zügig und weitgehend ungebremst fördern, was nicht nur die insgesamt erzielbare Durchmischung verbessert, sondern auch weitere Vorteile hat. So lässt sich bei Vorhandensein von Schneidelementen die Schnittleistung steigern. Vor allem lässt sich überraschend sogar klebriges und/oder zähes Mischgut, wie Mist, sehr kontrolliert und ohne Hilfsvorrichtungen nur mit dem Mitnehmer unter der Überdachung ausdosieren, wenn sich die Förderstrecke über die Ausdosieröffnung hinweg erstreckt. Entlang der Förderstrecke wird im Randbereich des Bodens bei der Wand oder in der Basis eines Leitkegels vom Misch- und Fördervorgang im Mischbehälter separiertes Mischgut zügig und kontrolliert von dem wenigstens einen Mitnehmer gefördert, da dieses Mischgut nicht durch von oben nachdrückendes Mischgut gebremst wird. Aufgrund der Überdachung kann in und entlang der Förderstrecke gefördertes Mischgut nicht nach oben ausweichen und Verstopfungen hervorrufen, sondern es wird entweder nach der Förderstrecke wieder zügig in den Mischprozess eingeführt oder durch die Ausdosieröffnung ohne störenden Einfluss kontrolliert, z.B. in regelmäßigen Chargen, ausdosiert. Da die Überdachung mit Hochabstand oberhalb des Mitnehmers angeordnet und fest abgestützt ist, wird entlang der Förderstrecke nicht nur von der Mitnehmerkante und dem äußeren Mitnehmerende geschobenes Mischgut gefördert, sondern auch auf dem Mitnehmer mitgeschlepptes Mischgut, so dass vom Mitnehmer eine relativ große Mischgutcharge weitgehend ungebremst in der Förderstrecke gefördert bzw. aus dieser ausdosiert wird. Unter der Überdachung läuft somit eine im Wesentlichen nur vom Mitnehmer kontrollierte Förderung ab und wird das geförderte Mischgut beim Ausdosieren zügig nach außen gezwungen. Die Gefahr, dass sich im kritischen Randbereich des Bodens an der Wand oder Leitkegelbasis Mischgut sammelt und ablagert und die Qualität der Vermischung und Ausdosierung verschlechtert, ist beseitigt. Da die Förderung in der Förderstrecke, wie erwähnt, ohne den drückenden Einfluss weiter oben befindlichen Mischgutes stattfindet, und das Bremsmoment auf dem außenliegenden Mitnehmerbereich moderat bleibt, ist ein effizienter Umgang mit der Antriebsenergie sichergestellt. In einer Mischvorrichtung können mehrere Förderstrecken vorgesehen sein.

Zwischen dem Mitnehmer und der Überdachung ist zweckmäßig ein gleichbleibender Hochabstand zwischen 1,0 cm bis 10,0 cm vorgesehen. Ein günstiger Hochabstandsbereich liegt zwischen etwa 2,0 cm und 4,0 cm. Der tatsächlich vorgesehene Hochabstand kann sich unter anderem nach der in der Mischvorrichtung verarbeiteten Mischgutsorte 25 richten. Durch den Hochabstand ist sichergestellt, dass mit dem Mitnehmer auch auf bzw. unter dem Mitnehmer liegendes Gut in die und entlang der Förderstrecke gefördert wird.

Bei einer Ausführungsform ist der Hochabstand sogar zur Anpassung der Mischvorrichtung verstellbar, beispielsweise durch Verstellen zumindest der Höhenlage der Überdachung relativ zum Boden. Der Hochabstand wird in der Praxis so gewählt, dass ein vorbestimmter Anteil des Mischguts im Mischbehälter dem Einfluss der Auflast höher liegenden Mischguts entzogen wird und/oder abhängig von der Konsistenz und Zusammensetzung des Gutes. Besonders zweckmäßig kann die Überdachung an einem an der Wand geführten Schieber angeordnet sein, dessen Höhenlage veränderbar ist. Gegebenenfalls ist an dem Schieber auch eine zum Innenrand der Überdachung verlaufendes schräges Abdeckelement vorgesehen.

Bei einer weiteren Ausführungsform verbreitert sich die in der Basis des zwischen Mischkammerehälften an der Wand vorgesehenen Leitkegels angeordnete Förderstrecke in Förderrichtung allmählich, so dass sich durch die Förderstrecke gefördertes Mischgut allmählich entspannt und auflockert, um sich beim Austritt aus der Förderstrecke innig mit weiterem Mischgut zu vermischen. Auch wird so etwas Mischgut zum Übertritt von einer Mischkammerhälfte und Schnecke zur anderen Mischkammerhälfte und deren Schnecke gezwungen.

Bei einer anderen Ausführungsform mit der sich zumindest über die Ausdosieröffnung erstreckenden Förderstrecke verbreitet sich diese zunächst allmählich bis zur in Förderrichtung gesehenen Mitte der Ausdosieröffnung und verschmälert sie sich dann wieder. Bei geschlossener Ausdosieröffnung wird die separierte Mischgutcharge entlang der Förderstrecke gezwungen, z.B., um die Durchmischung zu verbessern. Ist die Ausdosieröffnung freigegeben, dann wird die in die Förderstrecke geförderte Mischgutcharge kontrolliert und zügig nach außen gezwungen. Dies ist beispielsweise bei Biomasse, wie Mist, zur Beschickung einer Biogasanlage von erheblichem Vorteil, weil der Ausdosiervorgang unbeeinflusst von dem Massengewicht des relativ hohes spezifisches Gewicht und zähe und klebrige Konsistenz aufweisenden restlichen Mischguts erfolgt. Bei der Förderstrecke handelt es sich sozusagen um eine integrierte, sehr wirksame Ausdosierhilfe.

Es sind Ausführungsvarianten der Mischvorrichtung zweckmäßig, bei denen sich in der der Ausdosieröffnung zugeordneten Förderstrecke die Überdachung von der Wand entweder nur nach innen oder nur nach außen oder nach außen und nach innen erstreckt. Erstreckt sich die Überdachung nur nach innen, befindet sich die Förderstrecke im Mischbehälter. Erstreckt sich die Überdachung nach innen und nach außen, liegt zumindest ein Teil der Förderstrecke außerhalb des Mischbehälters. Erstreckt sich die Überdachung von der Wand nach außen, entfallen innen Hindernisse für die Fließbewegung des Mischguts in der außenliegenden Förderstrecke. Bei sich nach außen von der Wand weg erstreckender Überdachung kann es zweckmäßig sein, die Achse des Misch- und Förderelementes bzw. Mitnehmers und den ganzen Boden in Bezug auf die Mitte des Mischbehälters exzentrisch zur Seite der Ausdosieröffnung zu versetzen.

Wenn sich die Überdachung zur Gänze oder zum Teil von der Wand nach innen erstreckt, ist es zweckmäßig, auf der Überdachung ein Abdeckelement anzuordnen und an der Wand festzulegen, z.B. festzuschweißen, um eine Totzone oder Ablagefläche für sich dort ablagerndes Gut zu vermeiden und auch um die Überdachung auszusteifen. Das Abdeckelement wird zweckmäßig so ausgebildet, dass es dem Mischgutfluss oberhalb der Förderstrecke möglichst wenig Widerstand bietet. So kann dieses Abdeckelement flach oder bombiert ausgebildet sein. Ein bombiertes oder konvex gewölbtes Abdeckelement wirkt sogar ähnlich wie ein Leitkegel.

Bei einer weiteren Ausführungsform, bei der das Mischgut im Mischbehälter zusätzlich geschnitten wird, ist es zweckmäßig, wenigstens ein Gegenschneidelement am Eintritt in die Förderstrecke, vorzugsweise an der Überdachung bzw. dessen Innenrand, anzuordnen, und ein Schneidelement am Mitnehmer. Die Schneidelemente bzw. Gegenschneidelemente können austauschbar und/oder abgefedert angeordnet sind. Dank der gesichert zügigen Mischgutförderung durch die Förderstrecke kann sogar in Bodennähe eine hohe Schnittleistung erzielt werden.

In einer zweckmäßigen Ausführungsform ist zusätzlich zur Misch- und Förderschnecke kein separater Mitnehmer vorgesehen, sondern bildet ein, z.B. im Wesentlichen radialer, Rand am bodenseitigen Ende einer Wendel der Misch- und Förderschnecke einen Mitnehmer, der nach außen unter die Überdachung und in die Förderstrecke eingreift. Dabei kann es günstig sein, wenn die Schneckenwendelsteigung im von der Überdachung übergriffenen Bereich des Wendelendes Null oder geringer ist als die Schneckenwendelsteigung im weiteren Verlauf der Wendel. Durch die in diesem Bereich geringere Steigung wird vermieden, dass in die Förderstrecke gefördertes Mischgut nach oben und gegen die Überdachung gepresst wird.

In einer anderen zweckmäßigen Ausführungsform sind mehrere in Förderrichtung regelmäßig verteilte Mitnehmer am Umfang wenigstens einer um die Achse drehangetriebenen Scheibe vorgesehen. Die wenigstens eine Scheibe befindet sich, vorzugsweise, unterhalb einer Förder- und Mischschnecke und wird entweder mit dieser gemeinsam oder getrennt von dieser drehangetrieben.

Der am Umfang der Scheibe angeordnete Mitnehmer kann in Hochrichtung doppelwandig ausgebildet sein. Zumindest bereichsweise hat er als fördernde Wandfläche eine bis zum äußeren Mitnehmerende verlaufende Mitnehmerkante, um eine möglichst große Mischgutmenge oder -charge in die Förderstrecke zu zwingen. Die Mitnehmerkante schiebt nicht nur eine erhebliche Gutmenge in die Förderstrecke, sondern schleppt über Faser- oder Halmbestandteile verbundene weitere Anteile des Mischguts, die auf dem Mitnehmer oder unter dem Mitnehmer liegen, mit. Das außenliegende Mitnehmerende kann als Kreisbogenabschnitt die Förderaggressivität des Mitnehmers steigern.

In einer Ausführungsform weist der Mischbehälter eine ovalkonische Wand, nur eine Förder- und Mischschnecke und gegebenenfalls unterhalb dieser einen oder mehrere Mitnehmer sowie nur eine der wenigstens einen Ausdosieröffnung zugeordnete Förderstrecke auf. In diesem Fall fungiert die Förderstrecke als Ausdosierhilfe zum kontrollierten und zügigen Ausdosieren des Mischguts, sobald die Ausdosieröffnung freigegeben ist. Ist die Ausdosieröffnung verschlossen, dann wird durch die Förderung die Durchmischung intensiviert und, im Falle von vorgesehenen Schneid- und Gegenschneidelementen, eine hohe Schnittleistung erzielt.

Bei einer anderen Ausführungsform weist der Mischbehälter eine ovalkonische Wand, mindestens zwei sich mit ihren Umlaufkreisbahnen annähernd tangierende Förder- und Mischschnecken und wenigstens einen Mitnehmer sowie wenigstens einen Leitkegel an der Wand in einem Übergabezwickel zwischen den Förder- und Mischschnecken, sowie wenigstens eine Förderstrecke in einem oder jedem Leitkegel und/oder wenigstens eine Förderstrecke bei der jeweiligen Ausdosieröffnung auf.

Schließlich kann es zweckmäßig sein, die Mischvorrichtung stationär einzusetzen, z.B. in einer Biogasanlage, oder transportabel zur Anbringung an einem Schlepper, oder grundsätzlich in einem Mischfahrzeug eingegliedert, das beispielsweise zwischen einem Futter-/Silagelager und Futtergassen pendelt, auf dem Fahrweg mischt und dann ausdosiert.

Anhand der Zeichnungen werden Ausführungsformen des Erfindungsgegenstandes erläutert. Es zeigen:
- Fig. 1: eine Draufsicht auf eine Mischvorrichtung mit drei Förderstrecken,
- Fig. 2: eine Perspektivansicht zu Fig. 1, wobei die Mischvorrichtung hier nur mit zwei Förderstrecken gezeigt ist,
- Fig. 3: eine weitere Ausführungsform einer hier stationären Mischvorrichtung mit nur einer Förderstrecke, in einem Vertikalschnitt,
- Fig. 4: eine perspektivische Teilschnittdarstellung zu Fig. 3,
- Fig. 5: eine Draufsicht zu Fig. 3 und 4,
- Fig. 6: eine weitere Ausführungsform einer hier stationären Mischvorrichtung mit nur einer Förderstrecke, in einem Vertikalschnitt,
- Fig. 7: eine Draufsicht zu Fig. 6,
- Fig. 8: eine Schemadraufsicht auf eine weitere Ausführungsform, ähnlich der von Fig. 5,
- Fig. 9: einen Teil eines Vertikalschnittes zu Fig. 8 zur Verdeutlichung von Ausbildungsdetails, und
- Fig. 10: einen Vertikalschnitt einer noch weiteren Ausführungsform.

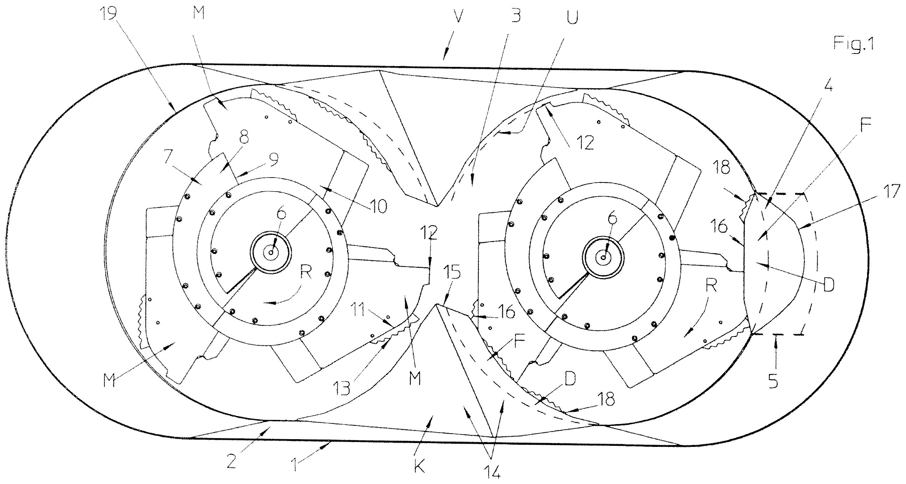

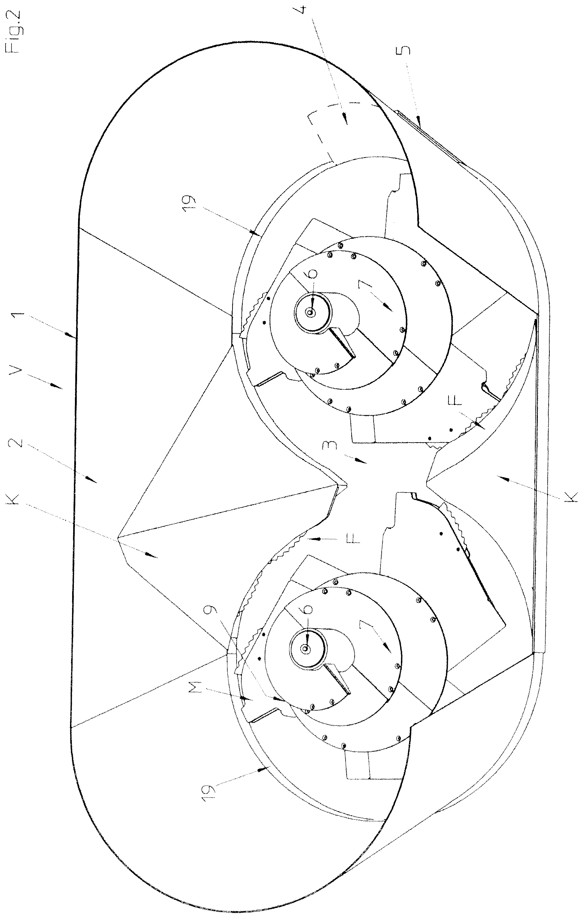

Eine erste, in den Fig. 1 und 2 gezeigte Ausführungsform einer Mischvorrichtung V weist einen ovalkonischen Behälter 1 mit einer schrägen umlaufenden Wand 2 und einem ebenen Boden 3 auf. In einem bogenförmig gekrümmten Teil der Wand 2, in etwa ausgerichtet auf die Längsachse der ovalen Umrissform, ist eine vom Boden 3 begrenzte Ausdosieröffnung 4 vorgesehen, der ein nicht im Detail gezeigter, verstellbarer Verschluss 5 zugeordnet ist. Es könnte wenigstens eine weitere Ausdosieröffnung 4 (nicht gezeigt) an anderer Stelle des Bodens 3 im Mischbehälter 1 vorgesehen sein. Die Wand 2 könnte (nicht gezeigt) alternativ senkrecht zum Boden 3 orientiert sein.

Im Mischbehälter 1 sind hier zwei um parallele, bodensenkrechte Achsen 6 drehangetriebene Misch- und Förderschnecken 7 jeweils mit einer Wendel 8 vorgesehen, deren Wendelbreite sich nach oben spiralig verringert, und die in Bodennähe einen hier annähernd radialen und eine Mitnehmer- und/oder Aufnehmerfunktion leistenden Rand 9 hat. In den beiden Übergabezwickeln zwischen den Förder- und Mischschnecken 7 sind an der Wand 2 im Grundzug dreieckige Leitkegel K angebracht.

Unterhalb jeder Förder- und Mischschnecke 7 wird eine im Grundzug ebene Scheibe 10 drehangetrieben, entweder gemeinsam mit der jeweiligen Förder- und Mischschnecke 7 oder separat von dieser. Am Umfang der Scheibe 10 sind hier z.B. drei in Förderrichtung R regelmäßig beabstandete flügelartige Mitnehmer M befestigt, deren jeder eine in Förderrichtung R vorneliegende Mitnehmerkante 11 und ein außenliegendes Mitnehmerende 12 hat. Das Mitnehmerende 12 beschreibt oberhalb des Bodens 3 eine Umlaufkreisbahn U, die benachbart entweder zum unteren Bereich der Wand 2, oder in der gezeigten Ausführungsform benachbart zu einer zur Achse 6 koaxialen und parallelen Zylinderwandfläche 19 im unteren Bereich der Wand 2 ist. Die Zylinderwandfläche 19 hat eine Höhe zumindest entsprechend der Höhe jedes Mitnehmers M, oder größer. Wenn die Förder- und Mischschnecke 7 gemeinsam mit der Scheibe 10 angetrieben wird, kann die Wendel 8 am Rand 9 auf der Scheibe 10 befestigt sein.

Als optionale Zusatzausstattung sind in der Mischvorrichtung V in den Fig. 1 und 2 Schneidelemente 13 und Gegenschneidelemente 18 vorgesehen. Die Schneidelemente 13 sind beispielsweise an den Mitnehmerkanten 11 montiert und in Förderrichtung auf die Gegenschneidelemente 18 ausgerichtet, die bei jeweils einer von in Fig. 1 drei Förderstrecken F montiert sind, und in Fig. 2 bei zwei Förderstrecken F. Die Schneidelemente und Gegenschneidelemente 13, 18 können austauschbar und/oder abgefedert montiert sein. Solche Schneidelemente bzw. Gegenschneidelemente 13, 18 können optional auch zumindest an den Wendeln der Misch- und Förderschnecken 7 montiert sein (nicht gezeigt).

In der Ausführungsform in Fig. 1 ist jeweils eine Förderstrecke F in einer Basis 15 jedes Leitkegels K ausgebildet, dessen Leitkegelflächen 14 sich von einer Spitze des Leitkegels schräg und geschwungen nach unten einwärts zur Basis 15 erstrecken. Jede Förderstrecke F in einem Leitkegel K verbreitert sich in Förderrichtung R allmählich, ist in Richtung zur Achse 6 offen, und wird begrenzt unten vom Boden 3, außen von der Zylinderwandfläche 19 und oben von einer ganzflächigen, im Wesentlichen bodenparallelen Überdachung D mit sichelförmigem Umriss.

Die Überdachung D greift von außen über die Umlaufkreisbahn U nach innen. Die Gegenschneidelemente 18 sind beispielsweise an einem Innenrand 16 der Überdachung D angebracht. Die Überdachung D kann an der Wand 2 und/oder der Teilzylinderwand 19 und/oder im Leitkegel K und/oder dem Abdeckelement 17 festgelegt sein.

In Fig. 1 ist die dritte Förderstrecke F der Ausdosieröffnung 4 zugeordnet. D.h., diese Förderstrecke F erstreckt sich z.B. mindestens über die in Förderrichtung R gesehene Erstreckung der Ausdosieröffnung, ist in Richtung zur Achse 6 offen, und wird an drei Seiten begrenzt (bei geschlossener Ausdosieröffnung 4), unten vom Boden 3, außen vom Verschluss 5 und oben von der Überdachung D, die hier einen annähernd linsenförmigen Umriss hat und von außen von der Wand 2 einwärts über die Umlaufkreisbahn U greift.

Optional kann auch hier wenigstens ein Gegenschneidelement 18 am Innenrand 16 der Überdachung D montiert sein. Optional ist ferner ein Abdeckelement 17 vorgesehen, das an der Wand 2 und dem Innenrand 16 der Überdachung D festgelegt, vorzugsweise festgeschweißt, ist, die Überdachung D von oben stützt, und zweckmäßig weitgehend eben oder konvex gewölbt bombiert ist, um im Mischbehälter zirkulierendem Mischgut möglichst wenig Bewegungswiderstand zu bieten und zu verhindern, dass sich Mischgut auf der Oberseite der Überdachung D ablagert.

Alle drei in Fig. 1 gezeigten Förderstrecken F haben den Zweck, grundsätzlich die Durchmischung des Mischguts im Mischbehälter zu verbessern, in dem eine vorbestimmte, relativ große Menge oder Charge des Mischguts in die Förderstrecke eingeführt, dieser entlang zügig gefördert und dann wieder in den Vermischungsprozess mit restlichem Mischgut eingeleitet wird, wobei die geförderte Mischgutmenge dem Auflastdruck restlichen im Mischbehälter 1 enthaltenen Mischguts durch die Überdachung D entzogen ist. Falls, wie in Fig. 1 gezeigt, die Schneid- und Gegenschneidelemente 13, 18 montiert sind, wird im durch die jeweilige Förderstrecke F geförderten Mischgut eine nennenswerte Schnittleistung erzielt. Schließlich hat die Förderstrecke F bei der Ausdosieröffnung 4 zusätzlich die Funktion einer Ausdosierhilfe, wobei zur und durch die Ausdosieröffnung 4 gezwungenes Mischgut dem Auflasteinfluss restlichen Mischguts im Mischbehälter 1 entzogen ist und deshalb zügig durch die Ausdosieröffnung 4 ausgetragen werden kann. Das Abdeckelement 17 kann sogar eine ähnliche Funktion wie die Leitkegel K leisten, weil es zirkulierendes, der Wand 2 entlang gleitendes Mischgut verlagert.

Die Ausführungsform in Fig. 1 mit den drei Förderstrecken F ist ein Beispiel und nicht beschränkend aufzufassen. Es könnte auch nur in einem Leitkegel K eine Förderstrecke F vorgesehen sein, oder nur bei der Ausdosieröffnung 4.

In der Perspektiv-Teilschnittdarstellung in Fig. 2 ist die Mischvorrichtung von Fig. 1 mit zwei Förderstrecken F in den Leitkegeln K dargestellt, wobei auch hier jede Förderstrecke F außen durch die zur Achse 6 koaxiale und parallele Zylinderwand 19 begrenzt wird, die sich über die Höhe der jeweiligen Förderstrecke F erstreckt, entlang des gesamten Bodens 3 umläuft und nur von der hier einen gezeigten Ausdosieröffnung 4 unterbrochen wird.

Bei einer nicht gezeigten Ausführungsform der Mischvorrichtung V der Fig. 1 und 2 könnte die Zylinderwand 19 entfallen und könnten sich die Wand 2 und der Schieber 5 mit dem schrägen Verlauf bis zum Boden 3 erstrecken. Dann wären gegebenenfalls kurze Zylinderwandabschnitte 19 zumindest in der jeweiligen Förderstrecke F im Leitkegel K zweckmäßig. Im Übrigen könnte die Wand 2 über die gesamte Höhe senkrecht zum Boden 3 verlaufen.

Die Mischvorrichtung V in den Fig. 1 und 2 soll ferner nicht darauf beschränkt sein, nur zwei Antriebsachsen 6 zu haben, sondern die Anzahl der Misch- und Förderschnecken 7 und Scheiben 10 könnte auch größer oder kleiner sein.

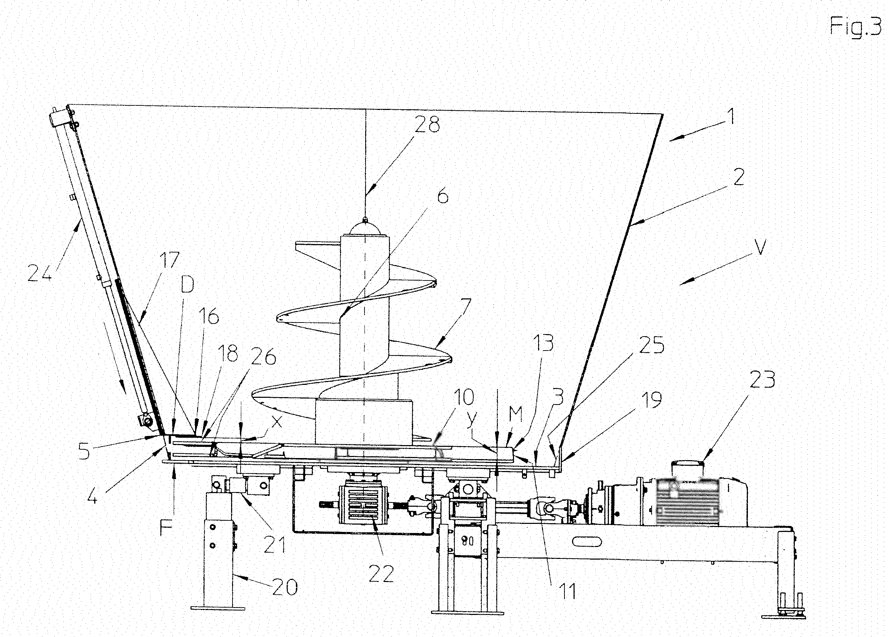

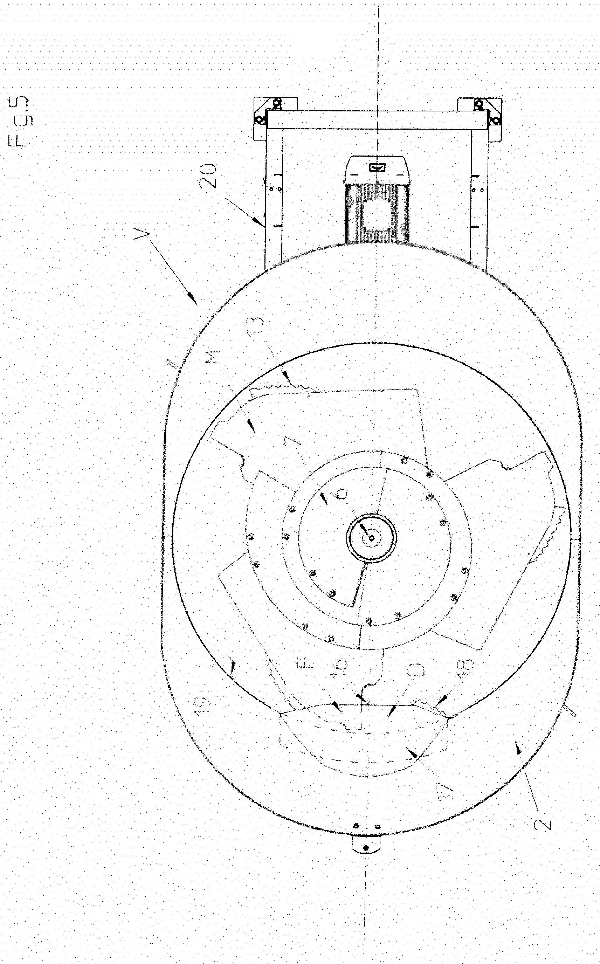

Die Ausführungsform der Mischvorrichtung V der Fig. 3 bis 5 unterscheidet sich von der der Fig. 1 und 2 hauptsächlich dadurch, dass der Mischbehälter 1 zwar eine Wand 2 mit symmetrischer ovalkonischer Form hat, deren Mitte mit 28 angedeutet ist, jedoch im Mischbehälter 1 nur eine Antriebsachse 6 vorgesehen ist. Die Mischvorrichtung der Fig. 3 bis 5 ist beispielsweise zum stationären Betrieb mit einem Unterbau 20 ausgebildet, der den Mischbehälter 1 trägt, und auf dem ein Antriebsmotor 23 und ein Getriebe 22, z.B. Winkelgetriebe, unterhalb des Bodens 3 untergebracht sind. Komponenten 21 können beispielsweise Wiegekomponenten sein.

Die erfindungsgemäße Mischvorrichtung V ist nicht nur zum stationären Einsatz gedacht, sondern könnte auch an ein Fahrzeug angebaut werden, z.B. einen Schlepper, und von diesem angetrieben werden, oder grundsätzlich in ein selbstfahrendes Mischfahrzeug integriert sein (nicht gezeigt).

In der Mischvorrichtung V der Fig. 3 bis 5 wird eine einzige, im Zentrum des kreisrunden Bodens 3 um die Achse 6 drehangetriebene Misch- und Förderschnecke 7 eingesetzt, unterhalb derer die wenigstens eine ebene Scheibe 10 angeordnet ist, die die hier drei Mitnehmer M am Umfang trägt. Die Scheibe 10 wird hier ebenfalls über das Getriebe 22 angetrieben, könnte aber einen eigenständigen Antrieb haben.

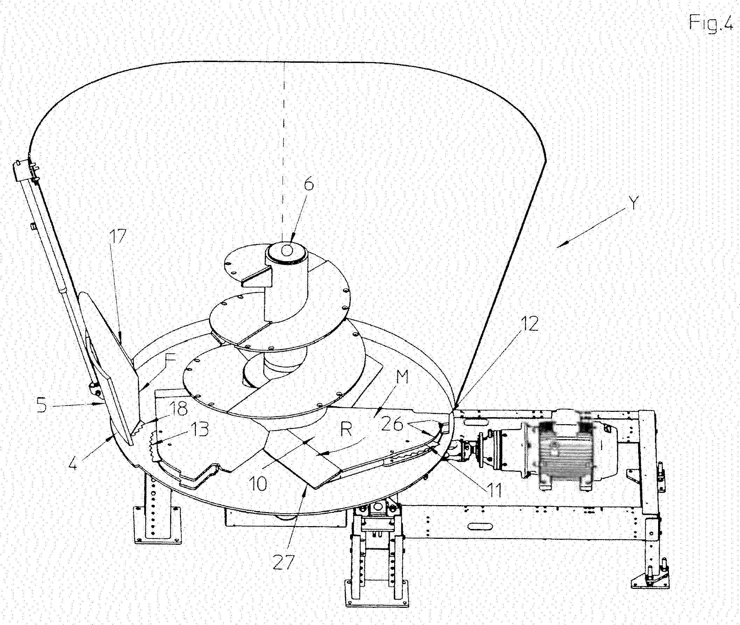

Der Verschluss 5 der hier nur einzigen Ausdosieröffnung 4 (es könnten auch mehrere Ausdosieröffnungen 4 vorgesehen sein) ist ein Schieber 5 mit der Krümmung der Wand 2, an dieser geführt, und durch einen Aktuator 24 aus der in Fig. 3 gezeichneten offenen Stellung in Richtung des Pfeiles in eine Schließstellung gegen den Boden 3 verstellbar. Das zum Innenrand 16 der Überdachung D der hier nur einzigen Förderstrecke F verlaufende Abdeckelement 17 strebt in etwa von halber Höhe der Wand 2 weg schräg nach innen unten und ist beispielsweise überwiegend eben oder bombiert. Am Innenrand 16 der Überdachung D ist hier (Option) ein Gegenschneidelement 18 montiert, das mit einem Schneidelement 13 der Mitnehmerkante 11 des Mitnehmers M kooperiert. Der Mitnehmer M an der wenigstens einen Scheibe 10 ist hier beispielsweise doppelwandig mit zwei Wänden 26 ausgebildet, zwischen denen die in Fig. 4 gezeigte Mitnehmerkante 11 verläuft, beispielsweise als im Wesentlichen vertikale Fläche.

Zwischen dem Mitnehmer M und der Überdachung D ist ein Hochabstand X vorgesehen, der zweckmäßig zwischen 1,0 cm bis 10,0 cm, vorzugsweise zwischen etwas 2,0 cm und 4,0 cm beträgt. Die in Hochrichtung gesehene Stärke des Mitnehmers M entspricht einem Maß Y, das größer sein kann als X. Der Hochabstand X kann in etwa auch zwischen der Unterseite des Mitnehmers M und dem Boden 3 vorgesehen sein.

Die Fig. 3 bis 5 verdeutlichen auch die zur Achse 6 koaxiale und parallele Zylinderwand 19, die z.B. so hoch ist wie die Höhe der Förderstrecke F. Alternativ ist in Fig. 3 gestrichelt bei 25 angedeutet, dass sich anstelle der Zylinderwand 19 die Wand 2 mit ihrer Schräge durchgehend bis zum Boden 3 erstrecken kann.

In der in Fig. 3 gezeigten Offenstellung des Verschlusses 5 wird eine vom jeweiligen Mitnehmer M mitgenommene Mischgutcharge in die Förderstrecke F eingebracht und durch die Ausdosieröffnung 4 ausgeschoben, wobei diese Mischgutcharge dem Einfluss der Auflast restlichen Mischguts im Mischbehälter 1 entzogen ist. Ist der Verschluss 5 verschlossen, dann wird die durch die Förderstrecke F geförderte Charge erneut in den Mischprozess eingeführt. Dabei können (optional) die Schneid- und Gegenschneidelemente 13, 18 in der durch die Förderstrecke F geförderten Mischgutcharge eine gesteigerte Schnittleistung erbringen. Gleichzeitig durchmischt die Misch- und Förderschnecke 7 das restliche Mischgut im Mischbehälter 1. In Fig. 4 ist angedeutet, dass ein in Förderrichtung R vorneliegender und in etwa radial einwärts strebender Rand 27 des Mitnehmers M schneidenartig ausgebildet ist, und auf dem Boden liegendes Mischgut anhebt, so dass sich dieses zum Teil auf und zum Teil unter dem Mitnehmer bewegt, ehe es von der Mitnehmerkante 11 formschlüssig mitgenommen wird.

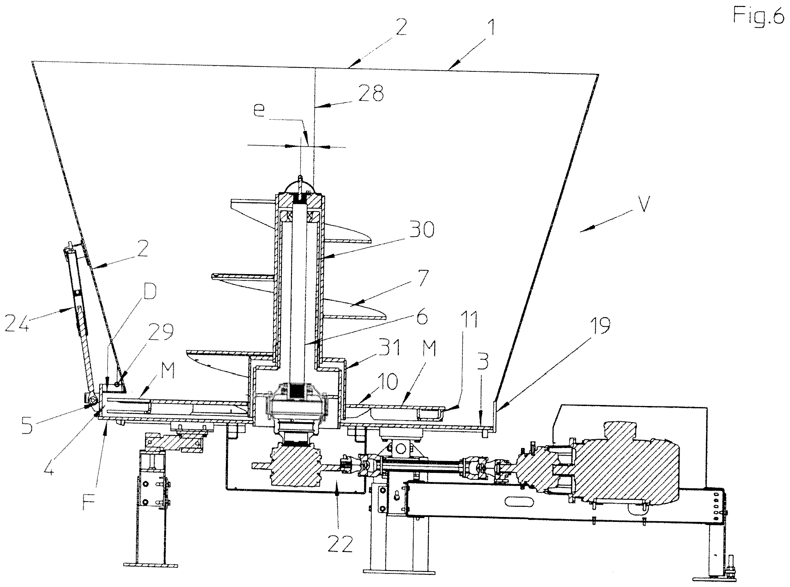

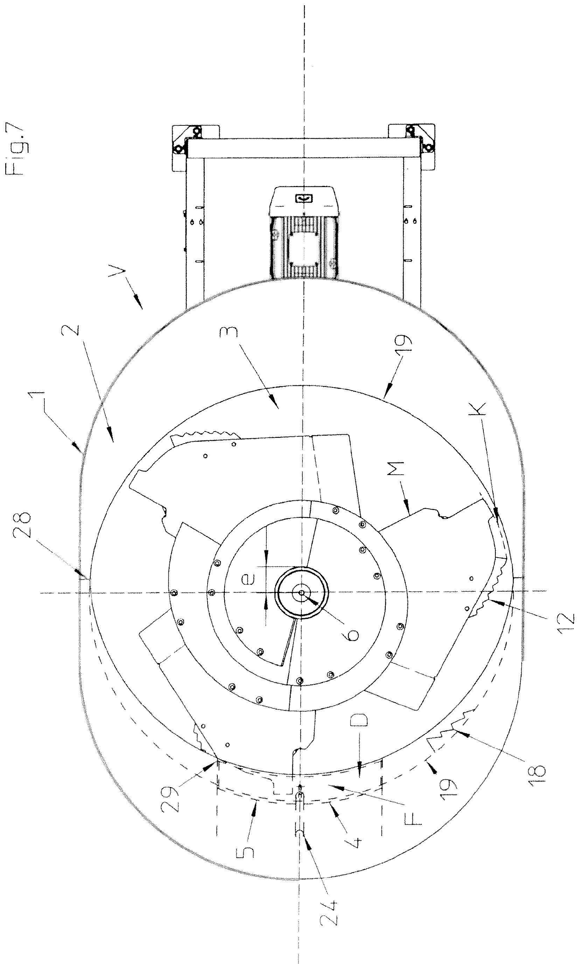

Die Ausführungsform der Fig. 6 und 7 unterscheidet sich von der der Fig. 3 bis 5 dadurch, dass in der Förderstrecke F, die sich über die Ausdosieröffnung 4 hinweg erstreckt, die Überdachung D von der Wand 2 nach außen strebt, und nicht nach innen, wie in Fig. 3, so dass hier kein Abdeckelement 17 wie in Fig. 3 benötigt wird. Die Achse 6 ist in den Fig. 6 und 7 in Richtung zur Ausdosieröffnung 4 gegenüber der Symmetriemitte 28 des Mischbehälters 1 mit einer Exzentrizität e versetzt, so dass die Umlaufkreisbahn U der Mitnehmer M unter die Überdachung D und in die Förderstrecke F eingreift, während an der gegenüberliegenden Seite des Bodens 3 ein größerer Freiraum zur Bewegung des Mischguts beim Durchmischen zur Verfügung steht.

In den Fig. 6 und 7 ist der Verschluss 5 beispielsweise eine Klappe, die von dem Aktuator 24 auf- und zuschwenkbar ist, beispielsweise um eine Stellachse 29 an der Wand 2. Fig. 6 verdeutlicht ferner ein Schneckenrohr 30, das von dem Winkelgetriebe 22 um die Achse 6 angetrieben ist, wobei die zumindest eine ebene Scheibe 10 ebenfalls vom Schneckenrohr 30 mitangetrieben wird.

In Fig. 7 ist der Verschluss 5 gepunktet mit seinem Aktuator 24 gezeigt, der in der geschlossenen Stellung die äußere Begrenzung der Förderstrecke F dort bildet, wo die Zylinderwand 19 durch die Ausdosieröffnung 4 unterbrochen ist. Im weiteren Verlauf der hier sichelförmigen Förderstrecke F wird die Förderstrecke F jedoch von der Zylinderwand 19 begrenzt, beispielsweise bis zur Symmetriemitte 28 des Mischbehälters 1. Auf diese Weise hat die Förderstrecke F eine Länge, die dem halben Umfang des Bodens 3 entspricht und größer ist als die Ausdosieröffnung 4.

Bei einer nicht dargestellten Ausführungsform könnte sich die Überdachung D zum Teil nach außen von der Wand und zu einem anderen Teil nach innen von der Wand weg erstrecken. Dann ist zweckmäßig das Abdeckelement 17 der Fig. 3 in kleinerer Form vorgesehen, das den sich von der Wand 2 nach innen erstreckenden Teil der Überdachung D stützt und abdeckt.

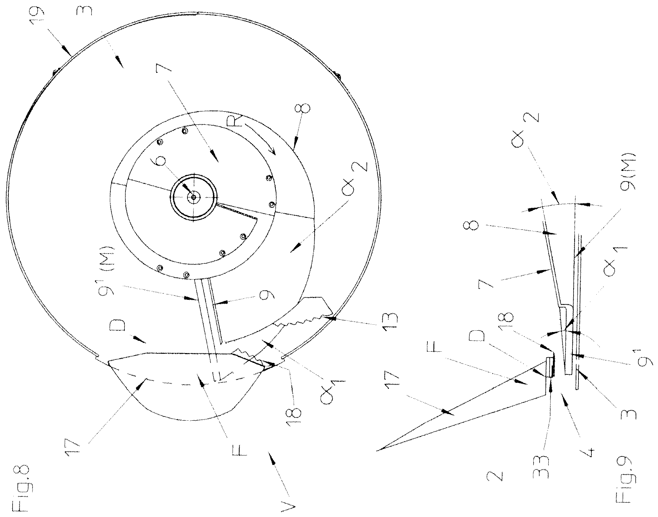

Fig. 8 und 9 verdeutlichen eine weitere, nur schematisch dargestellte Ausführungsform einer Mischvorrichtung V, ähnlich der der Fig. 3, mit im Zentrum des kreisrunden Bodens 3 angeordneter Achse 6 und nur einer Misch- und Förderschnecke 7, deren im Wesentlichen radiale Kante 9 am unteren Ende der Wendel 8 zu einem in etwa radialen Mitnehmer 9', M der Mischvorrichtung V gehört. Der mit der Schnecke 7 verbundene Mitnehmer 9', M greift mit dem äußeren Mitnehmerende in die Förderstrecke F ein. Bei dieser Ausführungsform können die bei den anderen Ausführungsformen gezeigten Mitnehmer M weggelassen werden.

Wird die Förder- und Mischschnecke 7 mit ihrer Kante 9 bzw. 9', M als Mitnehmer eingesetzt, dann ist zweckmäßig gemäß Fig. 9 der Wendelsteigungswinkel α1 an der Wendel 8 oder beim Mitnehmer 9', M dort kleiner oder sogar Null, wo dieser unter die Überdachung D greift als im weiteren Verlauf der Wendel 8, wo der Ansteigungswinkel α2 größer gewählt wird, um Mischgut nach oben zu heben. Die anderen Details der Mischvorrichtung in den Fig. 8 und 9 entsprechen denen der Fig. 3. Der kleinere oder außen fehlende Anstiegswinkel α1 kann zweckmäßig sein, um sicherzustellen, dass die rotierende Förder- und Mischschnecke Gut in der Förderstrecke F kein Mischgut gegen die Überdachung D presst, sondern entlang einer Kreisbahn durch die Förderstrecke F fördert oder zwangsweise ausdosiert.

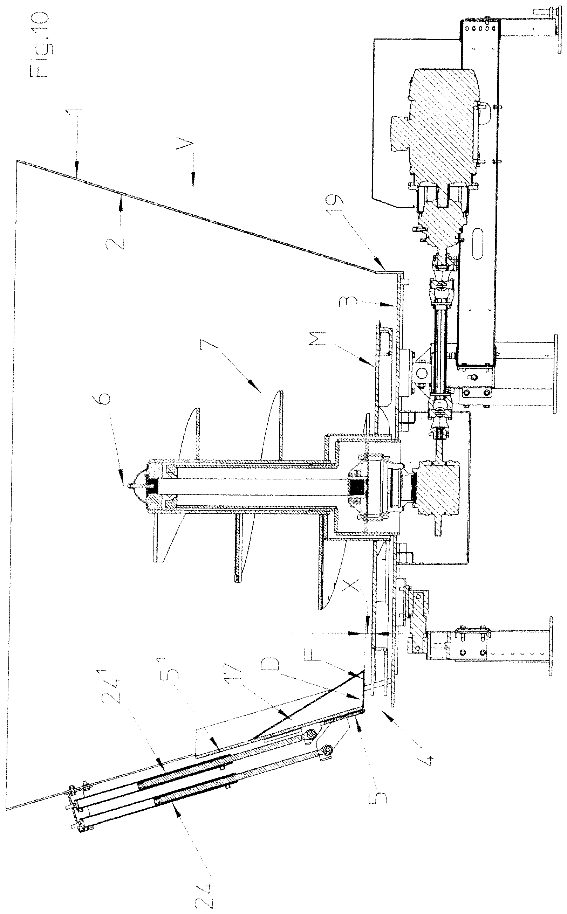

In der Ausführungsform der Mischvorrichtung V in Fig. 10 ist in der Förderstrecke F der Hochabstand X zwischen dem Mitnehmer M und der Überdachung D veränderbar, z.B. um die Mischvorrichtung V an die Verarbeitung unterschiedliche Mischgutarten anpassen zu können. Zusätzlich zu dem Schieber als Verschluss 5 der Ausdosieröffnung 4 ist ein weiterer, an der Wand 2 geführter, wie diese gekrümmter Schieber 5' vorgesehen, an dem die Überdachung D befestigt ist, und gegebenenfalls auch das Abdeckelement 17. Dieser Schieber 5' ist durch einen Aktuator 24' (Zylinder, Schraubspindel und dgl.) entlang der Wand 2 verstellbar und in der jeweiligen Einstellposition festlegbar.

## Patentansprüche

1. Mischvorrichtung (V) für landwirtschaftliches Mischgut, mit einem eine Wand (2) und einen Boden (3) aufweisenden Mischbehälter (1), in welchem wenigstens ein in einer Förderrichtung (R) um eine Achse (6) drehantreibbarer bodennaher Mitnehmer (M) für das Mischgut vorgesehen ist, wobei im Mischbehälter (1) wenigstens eine in Förderrichtung (R) verlaufende Förderstrecke (F) vorgesehen ist, dass die Förderstrecke (F) nach oben durch eine Überdachung (D) begrenzt ist, dass der Mitnehmer (M) in die Förderstrecke (F) unterhalb der Überdachung (D) eingreift und Mischgut separiert von weiterem im Mischbehälter (1) befindlichem Mischgut entlang der Förderstrecke (F) fördert, dass die zur Achse (6) offene Förderstrecke (F) mit annähernd sichel- oder linsenförmigem Umriss ausgebildet und an drei aneinanderstoßenden Seiten begrenzt ist, unten vom Boden (3), außen von einem Verschluss (5) einer Ausdosieröffnung (4) oder der Wand (2) oder einer zur Achse (6) koaxialen, an den Boden (3) angrenzenden Teilzylinderwand (19), und oben von der Überdachung (D), dass die Überdachung von (D) von außen über eine äußere Umlaufkreisbahn (U) des Mitnehmers (M) nach innen greift, und dass die Überdachung (D) an der Wand (2) oder/und der Teilzylinderwand (19) abgestützt ist, **dadurch gekennzeichnet, dass** sich die Förderstrecke (F) entlang des Bodens (3) erstreckt, die Überdachung (D) zumindest im Wesentlichen bodenparallel ist und dass sich die jeweilige Förderstrecke (F) in Förderrichtung (R) entweder in einer unteren Basis (15) eines Leitkegels (K) oder zumindest über eine Ausdosieröffnung (4) jeweils der Wand (2) des Mischbehälters (1) erstreckt.

2. Mischvorrichtung nach Anspruch 1, **dadurch gekennzeichnet, dass** zwischen dem Mitnehmer (M) und der Überdachung (D) ein entlang der Förderstrecke (F) zumindest im Wesentlichen gleichbleibender Hochabstand (X) zwischen 1,0 cm und 10,0 cm vorgesehen ist, vorzugsweise zwischen etwa 2,0 cm und 4,0 cm.

3. Mischvorrichtung nach Anspruch 2, **dadurch gekennzeichnet, dass** der Hochabstand (X) der Überdachung (D), vorzugsweise zur Anpassung an unterschiedliche Mischgutarten, verstellbar ist, vorzugsweise die Überdachung (D) an einem der Wand (2) entlanggeführten, verstellbaren Schieber (5') angeordnet ist.

4. Mischvorrichtung nach Anspruch 1, **dadurch gekennzeichnet, dass** die Breite der in der Basis (15) des Leitkegels (K) angeordneten Förderstrecke (F) in Förderrichtung (R) allmählich zunimmt.

5. Mischvorrichtung nach Anspruch 1, **dadurch gekennzeichnet, dass** die Breite der sich über die Ausdosieröffnung (4) erstreckenden Förderstrecke (F) und Überdachung (D) in Förderrichtung (R) bis etwa zur Mitte der Ausdosieröffnung (4) allmählich zunimmt und ab der Mitte allmählich abnimmt.

6. Mischvorrichtung nach Anspruch 1, **dadurch gekennzeichnet, dass** sich in der der Ausdosieröffnung (4) zugeordneten Förderstrecke die Überdachung (D) von der Wand (2) entweder nach innen oder nach außen oder nach innen und außen erstreckt.

7. Mischvorrichtung nach wenigstens einem der vorhergehenden Ansprüche, **dadurch gekennzeichnet, dass** sich ein Abdeckelement (17) von der Wand (2) schräg nach unten einwärts bis zu einem Innenrand der sich zur Gänze oder zumindest zum Teil von der Wand (2) nach innen erstreckenden Überdachung (D) erstreckt, und an dem Innenrand der Überdachung (D) festgelegt, vorzugsweise festgeschweißt, ist.

8. Mischvorrichtung nach wenigstens einem der vorhergehenden Ansprüche, **dadurch gekennzeichnet, dass** zumindest am in Förderrichtung (R) gesehenen Eintritt in die jeweilige Förderstrecke (F), vorzugsweise am Innenrand der Überdachung (D), ein Gegenschneidelement (18) und am Mitnehmer (M) wenigstens ein in Förderrichtung (R) auf das Gegenschneidelement (18) ausgerichtetes Schneidelement (13), vorzugsweise, jeweils austauschbar und/oder abgefedert, angeordnet sind.

9. Mischvorrichtung nach Anspruch 1, **dadurch gekennzeichnet, dass** der Mitnehmer (M) ein zumindest annähernd radialer Rand (9) am bodenseitigen Ende einer Wendel (8) einer um die Achse (6) drehantreibbaren Misch- und Förderschnecke (7) ist, wobei, vorzugsweise, die Schneckensteigung (α1) der Wendel (8) in einem von der Überdachung (D) der Förderstrecke (F) von außen übergriffenen Bereich geringer ist als die Steigung (α2) im weiteren Verlauf der Wendel (8).

10. Mischvorrichtung nach Anspruch 1, **dadurch gekennzeichnet, dass** mehrere in Förderrichtung regelmäßig verteilte Mitnehmer (M) am Umfang wenigstens einer um die Achse (6) drehangetriebenen Scheibe (10) vorgesehen sind, vorzugsweise an wenigstens einer unterhalb einer einwendeligen Förder- und Mischschnecke (7) angeordneten und, vorzugsweise, mit dieser gemeinsam drehangetriebenen Scheibe (10).

11. Mischvorrichtung nach Anspruch 9, **dadurch gekennzeichnet, dass** jeder Mitnehmer (M) in Hochrichtung zumindest doppelwandig (26) ausgebildet ist.

12. Mischvorrichtung nach Anspruch 1, **dadurch gekennzeichnet, dass** der Mischbehälter (1) eine oval-konische Wand (2), nur eine Förder- und Mischschnecke (7), wenigstens eine Mitnehmergruppe (M) unterhalb der Förder- und Mischschnecke (7), und eine der wenigstens einen Ausdosieröffnung (4) zugeordnete Förderstrecke (F) aufweist.

13. Mischvorrichtung nach Anspruch 1, **dadurch gekennzeichnet, dass** der Mischbehälter (1) eine oval-konische Wand, mindestens zwei sich mit ihren Umlaufkreisbahnen (U) annähernd tangierende Förder- und Mischschnecken (7) und Mitnehmergruppen (M), wenigstens einen wandfesten Leitkegel (K) in einem Übergabezwickel zwischen den Förder- und Mischschnecken (7), und wenigstens eine Förderstrecke (F) in einem oder jedem Leitkegel (K) und/oder eine Förderstrecke (F) bei einer jeweiligen Ausdosieröffnung (4) aufweist.

14. Mischvorrichtung nach wenigstens einem der vorhergehenden Ansprüche, **dadurch gekennzeichnet, dass** die Mischvorrichtung (V) stationär oder transportabel oder in ein Mischfahrzeug eingegliedert ist.

## Claims

1. Mixing device (V) for agricultural goods to be mixed, with a mixing container (1) having a wall (2) and a bottom (3), in which at least one carrier (M) near the bottom capable of being rotated around a shaft (6) in a conveying direction (R) for the goods to be mixed is provided, with at least one conveying section (F) passing in conveying direction (R) being provided in the mixing container (1), the conveying section (F) being bounded upward by a cover (D), the carrier (M) engaging into the conveying section (F) under the cover (D) and conveying goods to be mixed along the conveying section (F) separately from further goods to be mixed located in the mixing container (1), the conveying section (F) open to the shaft (6) being made with approximately sickle-shaped or lens-shaped outline and bounded on three abutting sides, below by the bottom (3), outside by a closure (5) of a dosing opening (4) or the wall (2) or a partial cylinder wall (19) coaxial to the shaft (6), bounding the bottom (3), and above by the cover (D), the cover (D) being engaged from outside via an outer circumferential track (U) of the carrier (M) inward, and the cover (D) being supported on the wall (2) or/and the partial cylinder wall (19), **characterised in that** the conveying section (F) extends along the bottom (3), the cover (D) is at least essentially parallel to the bottom and that the respective conveying section (F) extends in the conveying direction (R) either in a lower base (15) of a guiding cone (K) or at least via a dosing opening (4) respectively of the wall (2) of the mixing container (1).

2. Mixing device according to Claim 1, **characterized in that** a height separation (X) essentially remaining the same between 1.0 cm and 10.0 cm, preferably between around 2.0 cm and 4.0 cm, is provided between the carrier (M) and the cover (D) along the conveying section (F).

3. Mixing device according to Claim 2, **characterized in that** the height separation (X) of the cover (D) preferably is adjustable to different kinds of goods to be mixed, preferably the cover (D) is mounted on an adjustable carriage (5') guided along the wall (2).

4. Mixing device according to Claim 1, **characterized in that** the width of the conveying section (F) located in the base (15) of the guiding cone (K) increases gradually in the conveying direction (R).

5. Mixing device according to Claim 1, **characterized in that** the width of the conveying section (F) extending over the dosing opening (4) and cover (D) in the conveying direction (R) gradually increases up to around half of the dosing opening (4) and gradually decreases from the middle.

6. Mixing device according to Claim 1, **characterized in that** the cover (D) in the conveying section associated with the dosing opening (4) extends from the wall (2) either inward or upward or inward and outward.

7. Mixing device according to at least one of the preceding claims, **characterized in that** a cover element (17) extends from the wall (2) obliquely downward inwards up to an inner edge of the cover (D) extending inward to all or at least a part of the wall (2), and is fastened, preferably permanently welded, to the inner edge of the cover (D).

8. Mixing device according to at least one of the preceding claims, **characterized in that** a counter-cutting element (18) is located at least on the entry into the respective conveying section (F) provided in the conveying direction (R), preferably on the inner edge of the cover (D) and (M) at least one cutting element (13) aligned with the counter-cutting element (18) is located on the carrier (M), preferably in each case exchangeably and/or spring-mounted.

9. Mixing device according to Claim 1, **characterized in that** the carrier (M) is an at least approximately radial edge (9) on the bottom side end of a spiral (8) of a mixing and conveying screw conveyor (7) capable of being driven around the shaft (6), with, preferably, the screw pitch (α1) of the spiral (8) in an area overlapped externally by the cover (D) of the conveying section (F) being smaller than the pitch (α2) in the further course of the spiral (8).

10. Mixing device according to Claim1, **characterized in that** several carriers (M) regularly distributed in the conveying direction are provided on the circumference of at least one pulley (10) rotated around the shaft (6), preferably on at least one pulley (10) located under a single-spiral conveying and mixing screw (7) and, preferably, rotated together with the latter.

11. Mixing device according to Claim 9, **characterized in that** each carrier (M) is made at least double-walled (26) in the vertical direction.

12. Mixing device according to Claim 1, **characterized in that** the mixing container (1) has an oval-conical wall (2), only one conveying and mixing screw (7), at least one carrier group (M) below the conveying and mixing screw (7), and a conveying section (F) associated with at least one dosing opening (4).

13. Mixing device according to Claim 1, **characterized in that** the mixing container (1) has an oval-conical wall, at least two conveying and mixing screws (7) approximately tangential with their circular paths of rotation (U) and carrier groups (M), at least one guiding cone (K) attached to the wall in a transfer wedge between the conveying and mixing screws (7), and at least one conveying section (F) in one or each guiding cone (K) and/or a conveying section (F) in case of a respective dosing opening (4).

14. Mixing device according to at least one of the preceding claims, **characterized in that** the mixing device (V) is stationary, or transportable, or integrated into a mixing vehicle.

## Revendications

1. Dispositif de mélange (V) pour mélange agricole, pourvu d'un récipient de mélange (1) comportant une paroi (2) et un socle (3), dans lequel au moins un dispositif d'entraînement (M) disposé près du socle et susceptible de tourner autour d'un axe (6) dans un sens de transport (R) est prévu pour le produit à mélanger, dans lequel il est prévu dans le récipient de mélange au moins un tronçon de transport (F) s'étendant dans le sens de transport, le tronçon de transport (F) étant limité vers le haut par un auvent (D), le dispositif d'entraînement venant en prise dans le tronçon de transport (F) sous l'auvent (D) et transporter le produit à mélanger séparément du reste du produit à mélanger se trouvant dans le récipient de mélange (1), le long du tronçon de transport (F), le tronçon de transport (F) ouvert en direction de l'axe (6) ayant un contour pratiquement en forme de serpe et lenticulaire et étant limité sur trois côtés contigus, au-dessous par le socle (3), de l'extérieur par un système de fermeture (5) d'une ouverture de dosage (4) ou de la paroi (2) ou bien d'une paroi partiellement cylindrique (10) contiguë du socle (3) et coaxiale de l'axe (6), et au-dessus par l'auvent (D), l'auvent (D) étant rentré de l'extérieur vers l'intérieur en empruntant un trajet circulaire (U) périphérique extérieur du dispositif d'entraînement (M), et l'auvent (D) reposant contre la paroi (2) et/ou la paroi partiellement cylindrique (19),
**caractérisé en ce que** le tronçon de transport (F) s'étend le long du socle (3), que l'auvent (D) est au moins sensiblement parallèle au socle et que le tronçon de transport respectif (F) s'étend dans le sens du transport (R) soit dans la base inférieure (15) d'un cône de guidage (K) soit au moins de part et d'autre d'une ouverture de dosage (4) respectivement de la paroi (4) du récipient de mélange (1).

2. Dispositif de mélange selon la revendication 1, **caractérisé en ce qu'**il est prévu une distance verticale (X), au moins sensiblement constante, le long du tronçon de transport (F) entre le dispositif d'entraînement (M) et l'auvent (D), distance comprise entre 1,0 cm et 10,0 cm, de préférence entre environ 2,0 et 4,0 cm.

3. Dispositif de mélange selon la revendication 2, **caractérisé en ce que** la distance verticale (X) de l'auvent (D), est réglable, de préférence pour s'adapter à divers types de produits à mélanger, l'auvent (D) étant de préférence prévu contre un coulisseau (5') réglable et guidé le long de la paroi (2).

4. Dispositif de mélange selon la revendication 1, **caractérisé en ce que** la largeur du tronçon de transport (F) prévu dans la base (15) du cône de guidage (K) augmente progressivement dans le sens du transport (R).

5. Dispositif de mélange selon la revendication 1, **caractérisé en ce que** la largeur du tronçon de transport (F) s'étendant de part et d'autre de l'ouverture de dosage (4) et de l'auvent (D) dans le sens du transport augmente progressivement jusqu'à environ le milieu de l'ouverture de dosage (4) puis diminue à partir dudit milieu.

6. Dispositif de mélange selon la revendication 1, **caractérisé en ce que** l'auvent (D) s'étend soit vers l'intérieur soit vers l'extérieur soit à la fois vers l'intérieur et l'extérieur, en partant de la paroi (2) et dans le tronçon de transport affecté à l'ouverture de dosage (4).

7. Dispositif de mélange selon au moins l'une des revendications précédentes, **caractérisé en ce qu'**un élément de couverture (17) s'étend depuis la paroi (2) en rentrant vers l'intérieur et vers le bas de façon oblique jusqu'à un bord intérieur de l'auvent qui lui-même s'étend complètement vers l'intérieur ou au moins partiellement depuis la paroi (2), lequel auvent est fixé à demeure, de préférence par soudage, contre le bord intérieur de l'auvent (D).

8. Dispositif de mélange selon au moins l'une des revendications précédentes, **caractérisé en ce qu'**au moins un élément de contre-découpe (18) est prévu au niveau d'une entrée, vue dans le sens de transport (R) et pénétrant dans le tronçon de transport respective (F), de préférence au niveau du bord intérieur de l'auvent (D), et **en ce qu'**au moins un élément de découpe (13) est prévu au niveau du dispositif d'entraînement, faisant face à l'élément de contre-découpe (18) dans le sens de transport (R), les deux éléments, de découpe et de contre-découpe étant interchangeables et/ou montés sur ressort.

9. Dispositif de mélange selon la revendication 1, **caractérisé en ce que** le dispositif d'entraînement (M) est un rebord (9) au moins approximativement radial au niveau de l'extrémité côté socle d'une spirale (8) d'un convoyeur à vis sans fin de mélange et de transport (7) susceptible de tourner autour de l'axe (6), dans lequel de préférence le pas de la vis sans fin (a1) de la spirale (8) est plus faible dans une zone chevauchée depuis l'extérieur par un auvent (D) du tronçon de transport (F) que le pas (a2) dans le tronçon suivant de la spirale (8).

10. Dispositif de mélange selon la revendication 1, **caractérisé en ce que** plusieurs dispositifs d'entraînement répartis de manière uniforme dans le sens de transport sont prévus à la circonférence au moins d'une meule (10) susceptible de tourner autour de l'axe (6), de préférence au niveau au moins d'une vis sans fin de transport et de mélange (7) à une seule spirale et, de préférence, avec ladite meule (10) entraînée en rotation de manière conjointe.

11. Dispositif de mélange selon la revendication 9, **caractérisé en ce que** chaque dispositif d'entraînement (M) présente au moins deux parois (26) dans le sens de la hauteur.

12. Dispositif de mélange selon la revendication 1, **caractérisé en ce que** le récipient de mélange (1) présente une paroi ovale-conique (2), seulement une vis sans fin de transport et de mélange (7), au moins un groupe de dispositifs d'entraînement (M) au-dessous de la vis sans fin de transport et de mélange (7) et un tronçon de transport (F) affecté à ladite au moins une ouverture de dosage (4).

13. Dispositif de mélange selon la revendication, **caractérisé en ce que** le récipient de mélange (1) présente au moins une paroi ovale-conique, au moins deux groupes de dispositifs d'entraînement (M) et vis sans fin de transport et de mélange approximativement tangents par leur trajet circulaire périphérique, au moins un cône de guidage (K) fixé à la paroi dans un soufflet de transfert entre les vis sans fin de transport et de mélange (7), et au moins un tronçon de transport (F) dans un ou dans chaque cône de guidage (K) et/ou un tronçon de transport (F) au niveau d'une ouverture de dosage respective (4).

14. Dispositif de mélange selon au moins l'une des revendications précédentes, **caractérisé en ce que** le dispositif de mélange (V) est stationnaire ou transportable ou intégré dans un véhicule de mélange.
